# EUROPEAN PATENT APPLICATION

(11) **EP 2 506 388 A2**
(43) Date of publication of application: **03.10.2012**
(21) Application number: 12159161.4
(22) Date of filing: 13.03.2012
(51) Int. Cl.: H02J 7/00

(54) **Auxiliary battery charging apparatus**

(30) Priority: 31.03.2011 JP 2011077936
(71) Applicant: Kabushiki Kaisha Toyota Jidoshokki, Kariya-shi Aichi 448-8671 (JP)
(72) Inventor: Kuraishi, Mamoru, Kariya-shi, Aichi 448-8671 (JP); Kobayashi, Mitsugu, Kariya-shi, Aichi 448-8671 (JP)
(74) Representative: TBK

(57) **Abstract**

When an auxiliary battery (43) is charged, a second switch (8-n) is turned on and off, a third switch (9) is turned off, and a fourth switch (11) is turned on. When the output voltages of first and second rechargeable battery cells (5-1 through 5-n, 4) are equalized, the first and second switches (8-1 through 8-n) are turned on and off respectively, a third switch (9) is turned on, and a fourth switch (11) is turned off. Thus the auxiliary battery charging apparatus is configured to charge the auxiliary battery (43) using a part of the rechargeable battery cells of the main battery (41).

## Description

### FIELD

The present invention relates to an auxiliary battery charging apparatus for charging an auxiliary battery that is installed in a vehicle in addition to a main battery.

### BACKGROUND

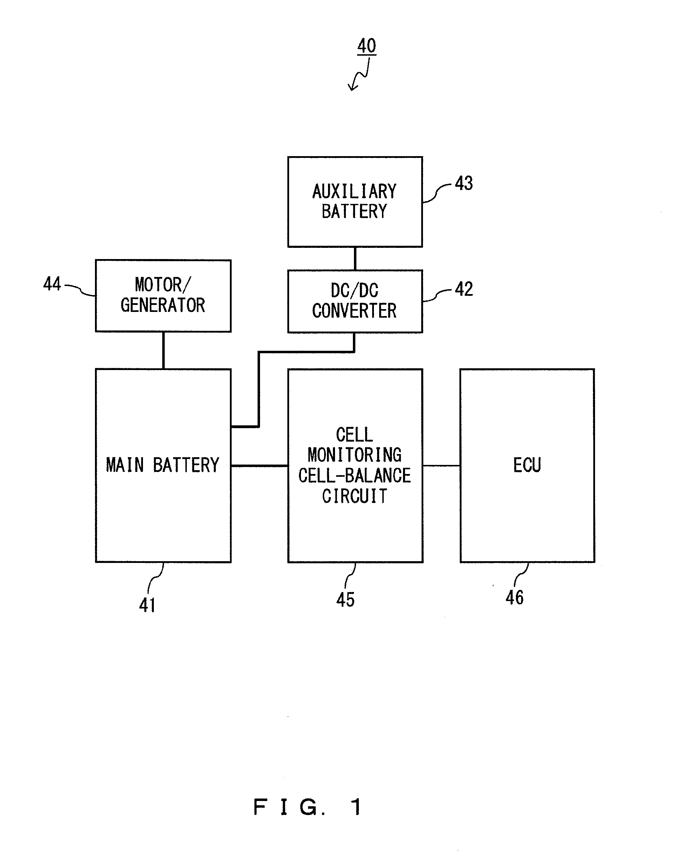

FIG. 1 illustrates an existing auxiliary battery charging apparatus.

An auxiliary battery charging apparatus 40 in FIG. 1 is installed in a vehicle such as a hybrid vehicle, an electric vehicle, etc., and includes a main battery 41 and a DC/DC converter 42 for dropping an output voltage of the main battery 41 and charging an auxiliary battery 43.

It is necessary for the main battery 41 to output a relatively high voltage to provide electric power to a motor/generator 44. Therefore, with a higher voltage of the main battery 41, the parts such as an inductor, a capacitor, etc. configuring the DC/DC converter 42 become larger. Therefore, concerns are rising that the auxiliary battery charging apparatus 40 becomes larger.

The main battery 41 is configured to connect a plurality of rechargeable battery cells in series so that the output voltage can be increased; however, as much as possible, it is necessary to eliminate variations between the output voltages of the rechargeable battery cells in order to reduce the overall degradation.

Accordingly, to eliminate as much as possible the variation between the output voltages of the rechargeable battery cells, the existing auxiliary battery charging apparatus 40 in FIG. 1 comprises: a cell-monitoring cell balance circuit 45 which equalizes the output voltages of the rechargeable battery cells; and an ECU 46 which controls the operation of the cell-monitoring cell balance circuit 45.

As an example, as a technique to equalize the output voltages of rechargeable battery cells (hereinafter referred to as "cell balancing"), there is a so-called active-system cell balancing wherein the output voltages of the rechargeable battery cells are equalized by discharging or charging the rechargeable battery cells via a transformer (see, for example, Japanese Laid-open Patent Publication No.2001-339865).

### SUMMARY

The present invention aims at providing an auxiliary battery charging apparatus capable of suppressing the increase in size of the apparatus while reducing the variations between the output voltages of each of a plurality of rechargeable battery cells configuring a main battery.

The auxiliary battery charging apparatus according to the present invention includes: a main battery provided with first and second rechargeable battery cells connected to each other in series; a first transformer provided with a first coil and a second coil connected to the first rechargeable battery cell; a second transformer provided a third coil connected to an auxiliary battery and a fourth coil connected to the second rechargeable battery cell; a first switch provided between the first rechargeable battery cell and the second coil; a second switch provided between the second rechargeable battery cell and the fourth coil; a third switch provided between the first coil and the third coil; a fourth switch provided between a connection point of the third switch and the third coil and the auxiliary battery; a voltage source for applying a voltage to the first coil; and a control circuit for, when the auxiliary battery is charged, turning off the third switch, turning on the fourth switch, and turning on and off the second switch, thereby electrically connecting the third coil to the auxiliary battery, placing the first coil in an open state, and electromagnetically coupling the third and fourth coils, and when each output voltage of the first and second rechargeable battery cells is equalized, turning on the third switch, turning off the fourth switch, and turning on and off the first and second switches respectively, thereby electrically connecting the first and third coils, placing the auxiliary battery in the open state, and electromagnetically coupling the first through fourth coils.

Thus, the variations between the output voltages of each rechargeable battery cell of the main battery can be suppressed. Furthermore, since the auxiliary battery can be charged using the rechargeable battery cell of a part of each rechargeable battery cell of the main battery, it is not necessary to provide a DC/DC converter for charging the auxiliary battery by dropping the output voltage of the main battery, thereby suppressing the increase in size of the apparatus.

In addition, when the main battery is not used, the control circuit can turn on and off the second switch, turn off the third switch, turn on the fourth switch, and charge the auxiliary battery, and then turn on and off the first and second switch respectively, turn on the third switch, and turn off the fourth switch, thereby equalizing the output voltages of the first and second rechargeable battery cells.

Furthermore, when the second rechargeable battery cell is charged, the control circuit can turn on and off the fourth switch, turn on the second switch, turn off the third switch, and electromagnetically couple the third and fourth coils, thereby electrically connecting the third coil to the auxiliary battery.

### BRIEF DESCRIPTION OF DRAWINGS

FIG. 1 illustrates an existing auxiliary battery charging apparatus;
FIG. 2 illustrates the auxiliary battery charging apparatus according to an embodiment of the present invention;
FIG. 3 is an example of the cell monitoring cell-balance/charge circuit according to an embodiment of the present invention; and
FIG. 4 is a schematic diagram of an example of a timing chart of turning on and off each switch.

### DESCRIPTION OF EMBODIMENTS

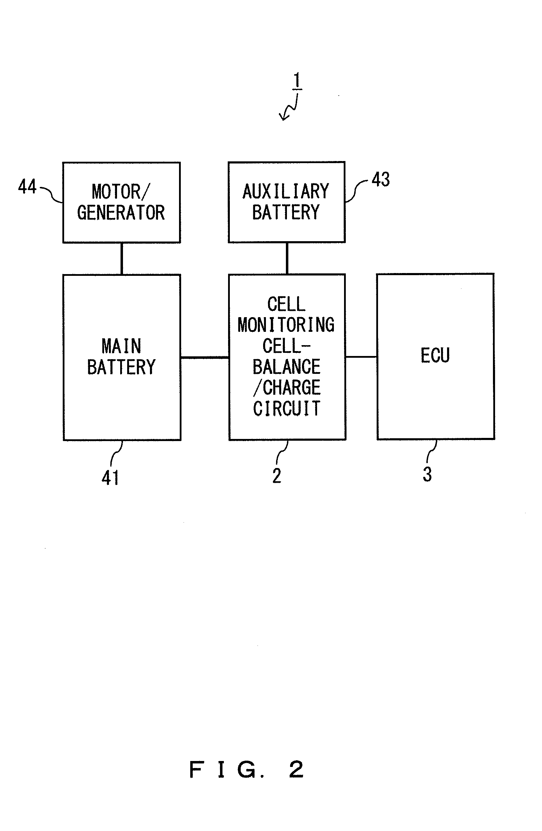

FIG. 2 illustrates the auxiliary battery charging apparatus according to an embodiment of the present invention. The same configuration as the configuration of the existing auxiliary battery charging apparatus 40 illustrated in FIG. 1 is assigned the same reference numerals.

An auxiliary battery charging apparatus 1 illustrated in FIG. 2 includes the main battery 41, a cell monitoring cell-balance/charge circuit 2 for equalizing the output voltage of each of a plurality of serially connected rechargeable battery cells configuring the main battery 41, and charging the auxiliary battery 43 (for example, a lead storage battery etc.) using a part of the rechargeable battery cells of the main battery 41, and an ECU (electronic control unit) 3 (control unit) for controlling the operation of the cell monitoring cell-balance/charge circuit 2. It is assumed that the auxiliary battery charging apparatus 1 according to the present embodiment is installed in the vehicle such as a hybrid vehicle, an electric vehicle, a fork lift tracks, etc. It is also assumed that the entire output voltage of a part of the rechargeable battery cells used in charging the auxiliary battery 43 is set as the voltage (for example, 12V) as high as the voltage of the fully charged auxiliary battery 43. Furthermore, it is assumed that the auxiliary battery 43 provides power to electrical equipment such as a control circuit for controlling the drive of the motor/generator 44, a car navigation, etc.

Thus, since the auxiliary battery charging apparatus 1 according to the present embodiment includes the cell monitoring cell-balance/charge circuit 2, the variations between the output voltages of the rechargeable battery cells the main battery 41 can be suppressed.

In addition, since the auxiliary battery charging apparatus 1 according to the present embodiment is configured to charge the auxiliary battery 43 using a part of rechargeable battery cells of the main battery 41, it is not necessary to include the DC/DC converter 42 as with the existing auxiliary battery charging apparatus 40 illustrated in FIG. 1, thereby suppressing the increase of the size of the apparatus.

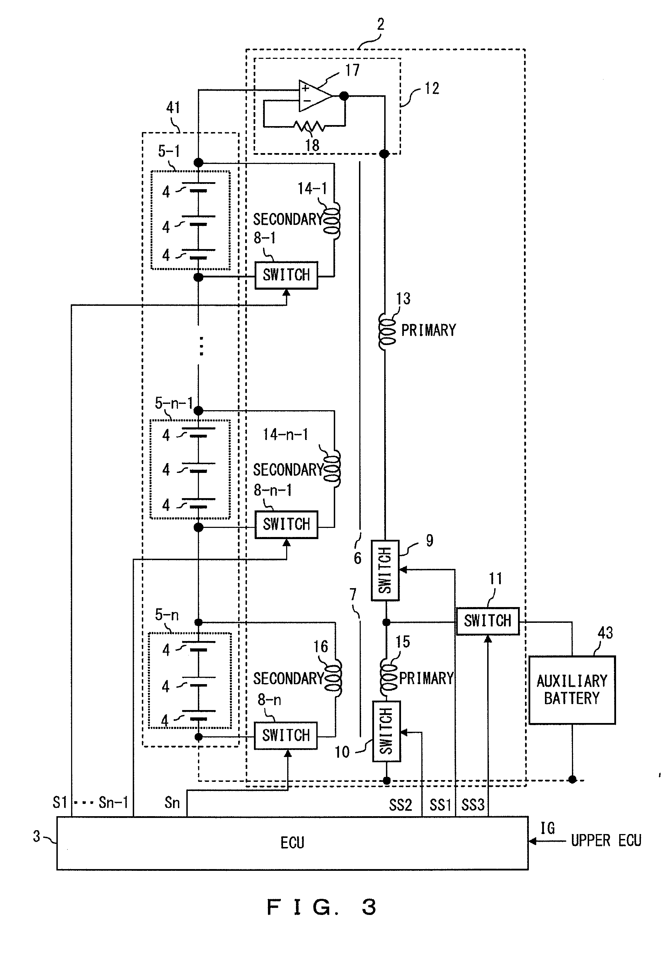

FIG. 3 is an example of the cell monitoring cell-balance/charge circuit 2. It is assumed that the main battery 41 is configured by serially connecting n modules 5 (a module 5-1 (first rechargeable battery cell), a module 5-2 (first rechargeable battery cell), ..., a module 5-n-1 (first rechargeable battery cell), and a module 5-n (second rechargeable battery cell)) each configured by three serially connected battery cells 4 (for example, a rechargeable battery cell such as a lithium ion rechargeable battery cell, a nickel-metal hybrid rechargeable battery cell, etc.). The number of battery cells 4 configuring one module 5 is not limited to three.

The cell monitoring cell-balance/charge circuit 2 illustrated in FIG. 3 includes a transformer 6 (first transformer), a transformer 7 (second transformer), n switches 8 (a switch 8-1 (first switch), a switch 8-2 (first switch), ..., a switch 8-n-1 (first switch), and a switch 8-n (second switch)), a switch 9 (third switch), a switch 10, a switch 11 (fourth switch), and a voltage source 12.

The transformer 6 includes a first coil 13 (first coil), and a plurality of second coils 14 (a second coil 14-1, a second coil 14-2, ..., and second coil 14-n-1) (second coil) connected in parallel to the modules 5-1 through 5-n-1 other than the module 5-n in the modules 5-1 through 5-n.

The transformer 7 includes a first coil 15 (third coil) connected to the auxiliary battery 43, and a second coil 16 (fourth coil) connected to the module 5-n.

The switch 8-1 is provided between the module 5-1 and the second coil 14-1, the switch 8-2 is provided between the module 5-2 and the second coil 14-2, ..., the switch 8-n-1 is provided between the module 5-n-1 and the second coil 14-n-1, and the switch 8-n is provided between the module 5-n and the second coil second coil 16.

The switch 9 is provided between the first coil 13 of the transformer 6 and the first coil 15 of the transformer 7.

The switch 10 is provided between the first coil 15 and the ground (for example, a virtual ground connected to the body of a vehicle).

The switch 11 is provided between the connection point of the switch 9 and the first coil 15 and the auxiliary battery 43.

Assume that the ratio of the number of turns of the first coil 13 to the total number of turns of the second coils 14-1 through 14-n-1 is 1:1, the ratio of the number of turns of the second coils 14-1 through 14-n-1 to the number of turns of the second coil 16 is 1:1, and the ratio of the number of turns of the first coil 15 and the number of turns of the second coil 16 is 1:1.

The voltage source 12 can be configured as, for example, illustrated in FIG. 3, by a voltage follower circuit connected to the first coil 13 with the output of the main battery 41 input to the positive input terminal of an operational amplifier 17, and the output of the operational amplifier 17 input to the negative input terminal of the operational amplifier 17 through a resistor 18. Thus, by configuring the voltage source 12, a voltage substantially equal to the output voltage (for example, 200V) of the main battery 41 can be applied to the first coil 13.

The switches 9 through 11 are configured by, for example, switching elements such as relays, MOSFETs (metal oxide semiconductor field effect transistor) etc. The switch 9 is turned on and off according to a control signal SS1 output from the ECU 3, the switch 10 is turned on and off according to a control signal SS2 output from the ECU 3, and the switch 11 is turned on and off according to a control signal SS3 output from the ECU 3. When the switch 9 is turned on from the off state, the first coil 13 is electrically connected to the first coil 15. When the switch 10 is turned on from the off state, the first coil 15 is electrically connected to the ground. When the switch 11 is turned on from the off state, the connection point of the switch 9 and the first coil 15 is electrically connected to the auxiliary battery 43. Therefore, when each of the switches 9 through 11 is turned off, each of the first coils 13 and 15 and the auxiliary battery 43 is placed in the open state. When the switch 9 is turned off, and each of the switches 10 and 11 is turned on, the first coil 13 is placed in the open state, and the first coil 15 and the auxiliary battery 43 are electrically connected. Furthermore, when each of the switches 9 and 10 is turned on, and the switch 11 is turned off, the first coils 13 and 15 are electrically connected, the first coil 15 and the ground are electrically connected, and the auxiliary battery 43 is placed in the open state.

Each of the switches 8-1 through 8-n is configured by, for example, a switching element such as a MOSFET etc., and is turned on and off according to the control signals S1 through Sn output from the ECU 3. It is assumed that the duty of each of the control signals S1 through Sn is, for example, 50%.

When the output voltage of each of the modules 5-1 through 5-n is equalized (cell balance is attained), each of the switches 9 and 10 is turned on, the switch 11 is turned off, and each of the switches 8-1 through 8-n is turned on and off. Then, the first coils 13 and 15 are electrically connected, the auxiliary battery 43 is placed in the open state, an alternating current passes through the second coils 14-1 through 14-n-1 and the second coil 16, and the first coil 13, the second coils 14-1 through 14-n-1, the first coil 15, and the second coil 16 are electrically connected. In this case, for example, when the voltage of the second coil 16 is higher than the output voltage of the module 5-n, a current passes from the second coil 16 to the module 5-n, and the module 5-n is charged. In addition, for example, when the voltage of the second coil 14-1 is lower than the output voltage of the module 5-1, a current passes from the module 5-1 to the second coil 14-1, and the module 5-1 is discharged. Then, if the output voltages of the modules 5-1 through 5-n are settled as an average voltage of the output voltages of the modules 5-1 through 5-n respectively by charging and discharging each of the modules 5-1 through 5-n respectively, that is, if the output voltage of each of the modules 5-1 through 5-n is substantially the same voltage, each of the switches 8-1 through 8-n is turned off, thereby terminating the cell balance. Thus, the output voltage of each of the modules 5-1 through 5-n can be equalized.

During the cell balance, in the ECU 3, the output voltage of each of the modules 5-1 through 5-n can be monitored, and each of the switches 8-1 through 8-n can be turned on and off until the output voltages of the modules 5-1 through 5-n can be lower than the upper limit threshold Vth1 (a value higher by a specified value than the average value of output voltages of the modules 5-1 through 5-n), and higher than the lower limit threshold Vth2 (a value lower by a specified value than the average value of the output voltages the modules 5-1 through 5-n).

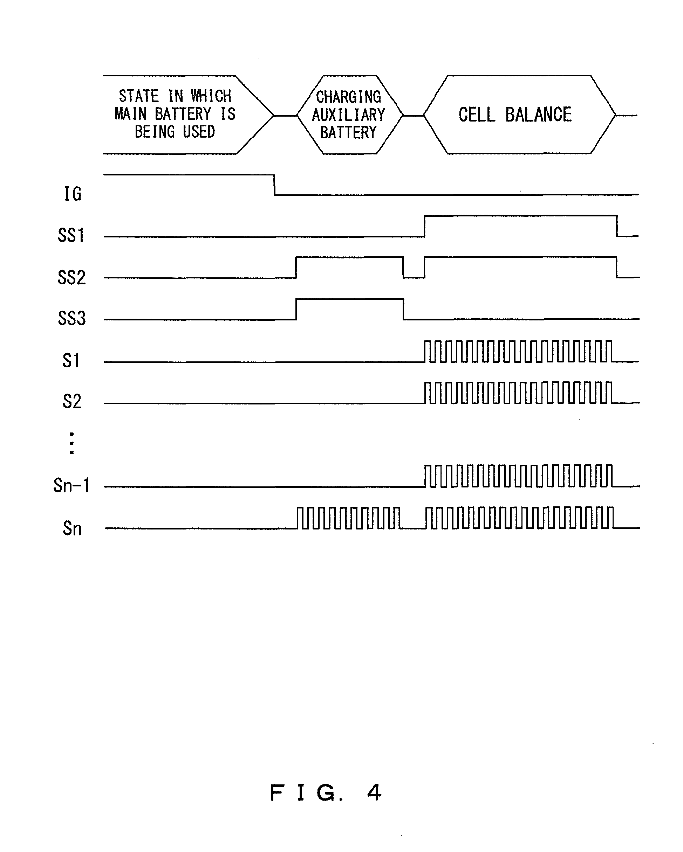

FIG. 4 is a schematic diagram of an example of a timing chart of turning on and off each of the switches 8-1 through 8-n and the switches 9 through 11. When an ignition signal IG output from the upper ECU etc. for controlling the entire vehicle indicates a high level, that is, in the state in which the main battery 41 is used by the motor/generator 44 when the vehicle is driven etc., it is assumed that the control signals SS1 through SS3 indicate a low level, and the switches 9 through 11 are turned off.

First, if the ignition signal IG changes from the high level to the low level, that is, the main battery 41 changes into the state in which it is not used, for example, in the parking state of a vehicle, etc., the ECU 3 sets the control signal SS1 as the low level, and the control signals SS2 and SS3 as the high level. Then, the switch 9 is turned off, the switches 10 and 11 are turned on, the first coil 15 and the auxiliary battery 43 are electrically connected, and the first coil 13 enters the open state. Furthermore, the ECU 3 turns off the switches 8-1 through 8-n-1 according to the control signals S1 through Sn-1, and turns on and off the switch 8-n according to the control signal Sn. Then, an alternating current passes through the second coil 16, and the first coil 15 and the second coil 16 of the transformer 7 are electromagnetically coupled to each other. In this case, if the voltage of the first coil 15 is higher than the voltage of the auxiliary battery 43, a current passes from the first coil 15 to the auxiliary battery 43, thereby charging the auxiliary battery 43. The frequency of the control signal Sn in this case can be set based on the inductance of each of the first coil 15 and the second coil 16 and the amount of charge per unit time of the auxiliary battery 43.

Then, when the monitored voltage of the auxiliary battery 43 reaches the voltage indicating the full charge, the ECU 3 sets the control signals SS1 and SS2 at a high level, and sets the control signal SS3 at a low level. Then, the switches 9 and 10 are turned on, the switch 11 is turned off, the first coil 13 and the first coil 15 are connected, and the auxiliary battery 43 is placed in the open state. The ECU 3 turns on and off the switches 8-1 through 8-n according to the control signals S1 through Sn, and equalizes the output voltages of the modules 5-1 through 5-n. Thus, after charging the auxiliary battery 43, the variations between the output voltages of the modules 5-1 through 5-n can be suppressed.

Thus, in the auxiliary battery charging apparatus 1 according to the present embodiment, the on and off state of the switch 8-n and the switches 9 through 11 provided for the cell monitor cell-balance/charge circuit 2 can be controlled, thereby charging the auxiliary battery 43 using the module 5-n which is a part of the modules 5-1 through 5-n in the main battery 41.

According to the embodiment above, after charging the auxiliary battery 43, the output voltages of the modules 5-1 through 5-n are equalized. However, after equalizing the output voltages of the modules 5-1 through 5-n, the auxiliary battery 43 can be charged. With the configuration, the auxiliary battery 43 can be charged by the stable output voltage of the module 5-n.

In addition, according to the present embodiment, the switch 9 is turned off, the switches 10 and 11 are turned on, and the switch 8-n is turned on and off, thereby charging the auxiliary battery 43. However, the switch 9 can be turned off, the switch 8-n and the switch 11 can be turned on, and the switch 10 is turned on and off, thereby charging the module 5-n by supplying power to the module 5-n from the auxiliary battery 43 through the transformer 7. In this case, the power charged to the module 5-n can be distributed to another module 5 by performing the cell balance. Furthermore, the switch 9 can be turned off, the switch 8-n and the switch 10 can be turned on, and the switch 11 can be turned on and off, thereby charging the module 5-n.

In the embodiment above, the switch 8 is provided between the negative terminal of the module 5 and the second coils 14 and 16, but the can also be provided between the positive terminal of the module 5 and the second coils 14 and 16.

According to the present invention, with the auxiliary battery charging apparatus for charging an auxiliary battery in addition to the main battery, the variations between the output voltages of each rechargeable battery cell of the main battery can be suppressed with the increase of the size of the apparatus reduced.

When an auxiliary battery (43) is charged, a second switch (8-n) is turned on and off, a third switch (9) is turned off, and a fourth switch (11) is turned on. When the output voltages of first and second rechargeable battery cells (5-1 through 5-n, 4) are equalized, the first and second switches (8-1 through 8-n) are turned on and off respectively, a third switch (9) is turned on, and a fourth switch (11) is turned off.

## Claims

1. An auxiliary battery charging apparatus (1), comprising:
a main battery (41) provided with a first and second rechargeable battery cells (5-1 through 5-n, 4) connected to each other in series;
a first transformer (6) provided with a first coil (13) and a second coil (14-1 through 14-n-1) connected to the first rechargeable battery cell (5-1 through 5-n-1, 4);
a second transformer (7) provided with a third coil (15) connected to an auxiliary battery (43) and a fourth coil (16) connected to the second rechargeable battery cell (5-n, 4);
a first switch (8-1 through 8-n-1) provided between the first rechargeable battery cell (5-1 through 5-n-1, 4) and the second coil (14-1 through 14-n-1);
a second switch (8-n) provided between the second rechargeable battery cell (5-n, 4) and the fourth coil (16);
a third switch (9) provided between the first coil (13) and the third coil (15);
a fourth switch (11) provided between a connection point of the third switch (9) and the third coil (15) and the auxiliary battery (43);
a voltage source (12) for applying a voltage to the first coil (13); and
a control circuit (3) for, when the auxiliary battery (43) is charged, turning off the third switch (9), turning on the fourth switch (11), and turning on and off the second switch (8-n), thereby electrically connecting the third coil (15) to the auxiliary battery (43), placing the first coil (13) in an open state, and electromagnetically coupling the third and fourth coils (15, 16), and when each output voltage of the first and second rechargeable battery cells (5-1 through 5-n, 4) is equalized, turning on the third switch (9), turning off the fourth switch (11), and turning on and off the first and second switches (8-1 through 8-n) respectively, thereby electrically connecting the first and third coils (13, 15), placing the auxiliary battery (43) in the open state, and electromagnetically coupling the first through fourth coils (13, 14-1 through 14-n-1, 15, 16).

2. The auxiliary battery charging apparatus (1) according to claim 1, wherein
when the main battery (41) is not used, the control circuit (3) turns on and off the second switch (8-n), turns off the third switch (9), turns on the fourth switch (11), and charges the auxiliary battery (43), and then turns on and off the first and second switch (8-1 through 8-n) respectively, turns on the third switch (9), and turns off the fourth switch (11), thereby equalizing the output voltages of the first and second rechargeable battery cells (5-1 through 5-n, 4).

3. The auxiliary battery charging apparatus (1) according to claim 1, wherein
when the second rechargeable battery cell (5-n, 4) is charged, the control circuit (3) turns on and off the fourth switch (11), turns on the second switch (8-n), turns off the third switch (9), and electromagnetically couples the third and fourth coils (15, 16), thereby electrically connecting the third coil (15) to the auxiliary battery (43).

4. The auxiliary battery charging apparatus (1) according to claim 2, wherein
when the second rechargeable battery cell (5-n, 4) is charged, the control circuit (3) turns on and off the fourth switch (11), turns on the second switch (8-n), turns off the third switch (9), and electromagnetically couples the third and fourth coils (15, 16), thereby electrically connecting the third coil (15) to the auxiliary battery (43).
